(19) Europäisches Patentamt
European Patent Office
Office européen des brevets

(11) **EP 4 151 605 A1**

(12) **EUROPEAN PATENT APPLICATION**

(43) Date of publication:
**22.03.2023 Bulletin 2023/12**

(21) Application number: **21197615.4**

(22) Date of filing: **20.09.2021**

(51) International Patent Classification (IPC):
**C03B 33/037** (2006.01)    **C03B 33/06** (2006.01)
**G05B 19/00** (2006.01)

(52) Cooperative Patent Classification (CPC):
**C03B 33/06; C03B 33/037; G05B 19/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SCHOTT AG**
**55122 Mainz (DE)**

(72) Inventors:
• **Witzmann, André**
 **95679 Waldershof (DE)**
• **Trinks, Ulla**
 **95666 Mitterteich (DE)**

(74) Representative: **Herzog IP Patentanwalts GmbH**
**Steinstraße 16-18**
**40212 Düsseldorf (DE)**

(54) **METHOD AND SYSTEM FOR OBTAINING CUT ELONGATED ELEMENTS**

(57)    Herein, a specific method and a specific system for obtaining cut elongated glass elements and a specific bundle comprising cut elongated glass elements are described.

Figure 1

**Description**

Glass tubes are commonly used to produce pharmaceutical packagings, like syringes and cartridges. These syringes or cartridges are used, for example, in auto-injectors or wearable delivery devices, like an insulin pen or wearable insulin delivery devices. In these auto-injectors or wearable delivery devices, a dose of a pharmaceutical composition is administered by moving a plunger by a certain distance within the syringe or cartridge. To minimize the size of these auto-injectors or wearable delivery devices, a practicable way is to minimize the size of the syringe or cartridge installed therein. However, this leads to a reduced number of doses, since, if the size of the syringe or cartridge is reduced, the volume of the syringe or cartridge is also reduced. However, since the exchange of a wearable delivery devices is uncomfortable and a high number of dosages, which can be administered with a single auto-injector, is advantageous, there is a demand to prolong the lifetime of a wearable delivery devices or to increase the number of doses which can be administered with an auto-injector. To achieve this, one way would be to increase the concentration of the medical compound in the syringe or cartridge and thus, to decrease the volume of the pharmaceutical composition administered per dose. However, in order to increase the concentration of the medical compound in the pharmaceutical composition significantly one or more geometric parameter(s), like the inner diameter, of the entire syringe or cartridge need to be known precisely, i.e. in the $\mu$m range, do not vary along the cylindrical portion of the syringe or cartridge, and do not differ significantly between the different installed syringes and cartridges when they are changed. This is particularly true since the administered volume is only controlled by the plunger movement. The cylindrical portion of a pharmaceutical packaging made of glass is defined by the part of the glass tube, which has been used to produce the pharmaceutical packaging. These glass tubes are commonly produced by the Danner or Vello process, in which a continuously glass tube is produced and then cut to length. The inventors recognized that it is advantageous and only possible to determine the continuously measured one or more geometric parameter(s) for the entire glass tube in the $\mu$m range before the tube is cut to length, because:

- at this point, the glass tubes lays perfectly for the measurement;
- the surface is perfect (fire-polished) and has minimum defects due to:

  - minimum contact with other materials;
  - minimum time exposed to the environment, and
  - was not cut to length.

In addition, since the measuring apparatuses, which are necessary to inspect a tube in the $\mu$m range, are very space-consuming and can only measure a very small area along the tube, it is not possible to arrange measuring apparatuses around the cut tube so that the entire cut tube can be measured. Further, the cut tubes are transported perpendicular to their rotation axis enabling a densely packed production line and allowing further process steps at the end portions of the cut tubes, i.e. fire-polishing or closing the end portions. Thus, the arrangement of measuring apparatuses interferes with further process steps. The challenge of measuring the one or more geometric parameter(s), like the inner diameter, before the continuous glass tube is cut to length, is, that the tube can only be measured a few seconds after the continuous glass tube has reached a temperature below the glass transition temperature, i.e. the point where the molten glass solidifies. In addition, due to the harsh and varying measuring conditions (temperature, air flow and thermal induced refraction anomalies), the measurement is not stable over longer time periods. Thus, the inventors recognized that the measurement system installed at a point between the point where the molten glass solidifies and the drawing device, commonly used in the Danner or Vello process, must be continuously calibrated to overcome this drawback so that it is possible to continuously and reliably measure one or more geometric parameter(s), like the inner diameter, in the $\mu$m range.

Thus, it is the object of the present invention to provide an improved method or system which is capable to continuously and reliably inspect the one or more geometric parameter(s), preferably the inner diameter, of an elongated glass element, preferably a glass tube, up to the $\mu$m range.

Further, an object of the present invention is to provide a bundle comprising cut elongated glass elements having improved quality, i.e. wherein at least one geometric parameter, like the inner diameter, is within a specific range and is reliably and accurately measured, for example in the $\mu$m range.

These and other objects are solved by a method for obtaining cut elongated glass elements, comprising the steps, preferably in this order:

- providing a continuous elongated glass element;
- continuously measuring one or more geometric parameter(s) of the continuous elongated glass element to obtain one or more continuous geometric parameter(s);
- cutting the continuous elongated glass element to obtain cut elongated glass elements;

- measuring one or more geometric parameter(s) at one or more point(s) along the rotation axis of the cut elongated glass element(s) to obtain one or more individual geometric parameter(s); and
- connecting the one or more of the continuous geometric parameter(s) with the one or more of the individual geometric parameter(s).

The apparatus for continuously measuring the one or more geometric parameter(s) of the continuous elongated glass element, i.e. the first measuring apparatus, is not particularly limited. The apparatus for continuously measuring the one or more geometric parameter(s) of the continuous elongated glass element, i.e. the first measuring apparatus, is preferably a measuring apparatus as described in the EP patent application having the EP application number EP20195758.6, which is herein incorporated by reference. The apparatus for measuring one or more geometric parameter(s) at one or more point(s) along the rotation axis of the cut elongated glass element(s), i.e. the second measuring apparatus, is not particularly limited. The apparatus for measuring one or more geometric parameter(s) at one or more point(s) along the rotation axis of the cut elongated glass element(s), i.e. the second measuring apparatus, is preferably a measuring apparatus as described in EP3848701 (A1) (EP application number EP20150706.8), which is herein incorporated by reference.

Especially by connecting the one or more of the continuous geometric parameter(s) with the one or more of the individual geometric parameter(s), the continuous measurement can be continuously adjusted inline. Thus, the quality of measurement is improved and the one or more geometric parameter(s) can be reliably determined in the $\mu$m range. Consequently, cut elongated glass elements having an improved quality can be obtained. In addition, since the one or more geometric parameter(s) are measured at one point two times, the reliability of the measurement is further improved.

In a (preferred) embodiment of the invention, the method comprises the following steps, preferably in this order:

- providing a continuous elongated glass element;
- continuously measuring one or more geometric parameter(s) of the continuous elongated glass element to obtain one or more continuous geometric parameter(s);
- cutting the continuous elongated glass element to obtain cut elongated glass elements;
- sorting out cut elongated glass element(s) exhibiting one or more continuous geometric parameter(s) being not inside a predetermined range;
- measuring one or more geometric parameter(s) at one or more point(s) along the rotation axis of the cut elongated glass element(s) to obtain one or more individual geometric parameter(s);
- connecting the one or more of the continuous geometric parameter(s) with the one or more of the individual geometric parameter(s), preferably controlling whether the cut elongated glass element(s) having one or more of the continuous geometric parameter(s) being not inside a predetermined range has/have been sorted out; and
- preferably sorting out cut elongated glass element(s) exhibiting one or more continuous geometric parameter(s) and/or one or more of the individual geometric parameter(s) being not inside a predetermined range.

Thus, the reliability of the measurement can be improved and the thus, the quality of the obtained cut elongated glass elements can be improved.

In a preferred embodiment, providing a continuous elongated glass element comprises the steps:

- providing a continuous elongated glass element by a Danner or a Vello process, preferably by a Danner process; and
- continuously drawing the continuous elongated glass element by a drawing device, preferably wherein the continuous elongated glass element is continuously drawn while the continuous elongated glass element is continuously measured; and/or

    preferably wherein for the connection of the one or more continuous geometric parameter(s) with the one or more individual geometric parameter(s), the speed of the drawing device is used; and/or
    the cutting the continuous elongated glass element to obtain cut elongated glass elements is performed by a cutting device;
    preferably wherein for the connection of the one or more continuous geometric parameter(s) with the one or more of the individual geometric parameter(s), the point in time of the cutting in the cutting step is used.

Thus, the reliability of the measurement can be improved.

In a preferred embodiment, the method comprises the further step(s):

- using the one or more continuous geometric parameter(s) and/or the one or more individual geometric parameter(s) to identify the cut elongated glass element, preferably at a later production step or the final product; and/or

- bundling the cut elongated glass elements to form a bundle comprising cut elongated glass elements; and/or
- producing one or more, preferably 5 or more, pharmaceutical packaging(s) out of the cut elongated glass element(s); preferably and bundling the pharmaceutical packaging(s) to form a bundle of pharmaceutical packaging(s).

Techniques to form a pharmaceutical packaging out of a cut elongated glass element are well known in the state of the art, e.g. in DE 10 2005 038 764 B3 and DE 10 2006 034 878 B3.

A further aspect of the invention is a system for obtaining cut elongated glass elements, preferably and for performing the method described herein, comprising:

- a providing apparatus configured for providing a continuous elongated glass element;
- a first measuring apparatus configured for continuously measuring one or more geometric parameter(s) of the continuous elongated glass element to obtain one or more continuous geometric parameter(s);
- a cutting device configured for cutting the continuous elongated glass element to obtain cut elongated glass elements;
- a second measuring apparatus configured for measuring one or more geometric parameter(s) at one or more point(s) along the rotation axis of the cut elongated glass element(s) to obtain one or more individual geometric parameter(s); and
- a computer unit configured for connecting the one or more of the continuous geometric parameter(s) with the one or more of the individual geometric parameter(s).

In a (preferred) embodiment of the invention, a system for obtaining cut elongated glass elements, preferably and for performing the method described herein, and/or preferably according to any embodiment described herein, is provided, comprising:

- a providing apparatus configured for providing a continuous elongated glass element;
- a first measuring apparatus configured for continuously measuring one or more geometric parameter(s) of the continuous elongated glass element to obtain one or more continuous geometric parameter(s);
- a cutting device configured for cutting the continuous elongated glass element to obtain cut elongated glass elements;
- a sorting device configured for sorting out cut elongated glass element(s) exhibiting one or more continuous geometric parameter(s) being not inside a predetermined range;
- a second measuring apparatus configured for measuring one or more geometric parameter(s) at one or more point(s) along the rotation axis of the cut elongated glass element(s) to obtain one or more individual geometric parameter(s);
- a computer unit configured for connecting the one or more of the continuous geometric parameter(s) with the one or more of the individual geometric parameter(s), preferably for controlling whether the cut elongated glass element(s) having one or more continuous geometric parameter(s) being not inside a predetermined range has/have been sorted out; and
- preferably a further sorting device sorting out cut elongated glass element(s) exhibiting one or more continuous geometric parameter(s) and/or one or more of the individual geometric parameter(s) being not inside a predetermined range.

Thus, the reliability of the measurement can be improved and the thus, the quality of the obtained cut elongated glass elements can be improved.

In a preferred embodiment, the system further comprises a drawing device, wherein the computer unit uses the speed of the drawing device and/or the point in time of the cutting in the cutting step for connecting the one or more of the continuous geometric parameter(s) with the one or more of the individual geometric parameter(s). Thus, the reliability of the measurement can be further improved.

In a preferred embodiment, the continuous elongated glass element is provided by the Danner or the Vello process, preferably by the Danner process, preferably and wherein the continuous elongated glass element is continuously, preferably and contactless, drawn, preferably through the first measuring apparatus by a/the drawing device, while the one or more continuous geometric parameter(s) are measured. Thus, a continuous elongated glass element, preferably a glass tube, can be provided having already a high quality with regard to the one or more geometric parameter(s), especially the inner diameter, and the amount of cut elongated glass elements, which must be sorted out to obtain a bundle comprising cut elongated glass elements having a high quality with regard to the one or more geometric parameter(s), especially the inner diameter, is reduced. Further, since the quality of all relevant one or more geometric parameter(s) produced by a modern Danner process or a modern Vello process is improved, the overall quality of the cut elongated glass elements can be further improved. Especially modern Danner processes providing a continuous glass having partially the high quality requirements as described below are well known to a person skilled in the art and are, for example, described in "Schott Guide to Glass" (ISBN-10: 9401042306, Springer). However, even when using a process producing a high quality continuous elongated glass element, due to several reasons, e.g. unavoidable process variations, impurities in the educts, weather fluctuations, changes of the ambient temperature, it can not be guaranteed that the quality, especially with regard to one or more specific geometric parameter(s), preferably the inner diameter, is always stable, especially not stable within the $\mu$m range.

The cutting process of the continuous elongated glass element is not particularly limited. Preferably, cutting the continuous elongated glass element to obtain cut elongated glass elements is cutting the continuous elongated glass element by scribing the continuous elongated glass element to obtain micro scratches and subsequently breaking the continuous elongated glass element at the micro scratches to obtain cut elongated glass elements. Even if particles are always generated, when this method is used, it is very efficient and has a low reject rate due to bad cutting.

The one or more point(s) along the rotation axis of one or more cut elongated glass element is not particularly limited. Preferably, the cut elongated glass element comprises a first end, a second end and a cylindrical portion, and/or the one or more point(s) along the rotation axis of the cut elongated glass element(s) is/are the first end, the second end and/or the center, preferably the center, of the cylindrical portion of the respective cut elongated glass element. The measurement of the one or more geometric parameter(s) at the first and/or second end may be affected by the cutting process (particles), an end forming processes (condensate), and the transport (scratches). Thus, the measurement at the center is particularly preferred.

The time between the measurements of the one or more geometric parameter(s) is not particularly limited. Preferably, the time between the continuous measurement and the measurement at one or more point(s) along the rotation axis is 1 year or less, preferably 30 days or less, more preferably 7 days or less, preferably 1 day or less, more preferably 12 hours or less, more preferably 6 hours or less, more preferably 1 hour or less, more preferably 30 min or less, more preferably 15 min or less, more preferably 5 min or less, more preferably 2 min or less. If the time between the measurements is too long, it may happen that dust deposits in or on the circular elongated glass element influencing the measurement, especially the (second) measurement at one or more point(s) along the rotation axis. Especially, if the time is 1 hour or less, preferably 30 min or less, more preferably 15 min or less, more preferably 5 min or less, the reliability of the measurement can be improved. In a preferred embodiment, the time between the continuous measurement and the measurement at one or more point(s) along the rotation axis is 5 seconds or more, preferably 10, seconds or more, more preferably 30 seconds or more, more preferably 60 seconds or more.

The kind of geometric parameter(s) is/are not particularly limited. It can be any dimension and/or angle of the circular elongated glass element. Preferably, the one or more geometric parameter(s) comprise(s), preferably is/are, the inner diameter I, the outer diameter, the ovality and/or the wall thickness; more preferably comprise, more preferably is, the inner diameter I; and/or the one or more geometric parameter(s) comprise two or more, preferably 3 or more, more preferably 4 or more, more preferably 5 or more geometric parameters.

Alternatively or preferably, the one or more individual geometric parameter(s) comprise(s), preferably is/are, the individual inner diameter, the individual outer diameter, the individual ovality and/or the individual wall thickness; more preferably comprises, more preferably is, the individual inner diameter; and/or

the one or more continuous geometric parameter(s) is/are the continuous inner diameter, the continuous outer diameter, the continuous ovality and/or the continuous wall thickness; more preferably comprises, more preferably is, the continuous inner diameter $I_{continuous}$; and/or

the one or more individual geometric parameter(s) is/are the center inner diameter, the center outer diameter, the center ovality and/or the center wall thickness, preferably the center inner diameter $I_{center}$; and/or

the one or more geometric parameter(s) obtained by the continuous measurement and the one or more geometric parameter(s) obtained by the measurement at one or more point(s) are the same, preferably are the continuous inner diameter $I_{continuous}$ and the individual inner diameter, more preferably the center inner diameter $I_{center}$.

Especially the inner diameter can be determined with the method and/or system described herein very accurate in the $\mu$m range.

In a preferred embodiment the continuous measurement comprises a measurement with an interferometer and/or the measurement at one or more point(s) along the rotation axis comprises a measurement with an interferometer. Thus, the reliability of the measurement of the one or more individual geometric parameter(s) can be improved.

The way in which the measurements are connected is not particularly limited. However, the inventors recognized that surprisingly the measurement can be significantly improved, if connecting the one or more of the continuous geometric parameter(s) with the one or more of the individual geometric parameter(s) is one or more of:

- calibrating, preferably continuously calibrating, the continuous measurement based on the measurement at one or more point(s) along the rotation axis; and/or
- adapting, preferably continuously adapting, the one or more continuous geometric parameter(s) based on the one or more individual geometric parameter(s); and/or
- calibrating preferably continuously calibrating, the measurement at one or more point(s) along the rotation axis based on the continuous measurement; and/or

- adapting, preferably continuously adapting, the one or more individual geometric parameter(s) based on the one or more continuous geometric parameter(s); and/or
- comparing and/or assigning the one or more continuous geometric parameter(s) with/to the one or more individual geometric parameter(s); and/or
- comparing and/or assigning the one or more individual geometric parameter(s) with/to the one or more continuous geometric parameter(s); and/or
- connecting the one or more parameter(s) to obtain information about the quality of a cut elongated glass element with respect to the one or more geometric parameter(s).

In a preferred embodiment, the one or more of the continuous geometric parameter(s) and the one or more of the individual geometric parameter(s) are measured and connected as described herein to obtain information about the quality of a cut elongated glass element with respect to the one or more geometric parameter(s).

Especially, if the values or measurement are continuously calibrated and/or adapted, preferably calibrated, i.e. calibrated and/or adapted, preferably calibrated, every hour or less, preferably every minute or less, preferably every 40 seconds or less; and/or, preferably or, about every fivefold, preferably every double, length of a the circular portion of the circular elongated glass element or less, the reliability of the measure can be significantly improved. In a preferred embodiment, by connecting the one or more of the continuous geometric parameter(s) with the one or more of the individual geometric parameter(s), the measuring point of the one or more of the individual geometric parameter(s) is always connected with the respective measuring point of the one or more of the continuous geometric parameter(s), i.e. the positions, where the one or more geometric parameter(s) are measured are the same. Thus, the measurement can be significantly improved.

Another aspect of the invention is a bundle comprising 5 or more cut elongated glass elements, wherein each cut elongated glass element comprises:

a) a first end,
b) a cylindrical portion, and
c) a second end;

wherein one or more of the following equation(s) is/are fulfilled:

i)

$$(I_{center}(max) - I_{center}(min)) / I_{center}(mean) \leq 4.0 \times 10^{-2} \, [\mu m / \mu m];$$

and/or

ii)

$$(I_{continuous}(max) - I_{continuous}(min)) / I_{center}(mean) \leq 4.0 \times 10^{-2} \, [\mu m / \mu m];$$

wherein $I_{center}(max)$ is the maximum center inner diameter of the cylindrical portions of all cut elongated glass elements in the bundle;
wherein $I_{enter}(min)$ is the minimum center inner diameter of the cylindrical portion of all cut elongated glass elements in the bundle;
wherein $I_{center}(mean)$ is the mean of the inner diameters at the center of the cylindrical portions of all cut elongated glass elements in the bundle;
wherein $I_{continuous}(max)$ is the maximum continuous inner diameter of the cylindrical portion of any single cut elongated glass element in the bundle; and
wherein $I_{continuous}(min)$ is the minimum continuous inner diameter of the cylindrical portion of said single cut elongated glass element in the bundle.

If the equation(s) i) and/or ii) is/are fulfilled, a bundle of circular elongated glass elements having improved quality is provided. The quality of the bundle can is further improved, if both equations i) and ii) are fulfilled, which is preferred.

The lower value of the parameter i) is not particularly limited. However, if the value is too low, the effort to reach this value exceeds the benefit. Thus, preferably the following equation is fulfilled:

$$\text{iii)} \quad a \leq \left(I_{center}(max) - I_{center}(min)\right) / I_{center}(mean);$$

wherein a [$\mu$m/$\mu$m] is $1.0 \times 10^{-6}$, preferably $1.0 \times 10^{-5}$, more preferably $1.0 \times 10^{-4}$ more preferably $1.0 \times 10^{-3}$, more preferably $1.0 \times 10^{-2}$.

Preferably, the following equation is fulfilled:

$$\text{iv)} \quad \left(I_{center}(max) - I_{center}(min)\right) / I_{center}(mean) \leq b;$$

wherein b [$\mu$m/$\mu$m] is $4.0 \times 10^{-2}$, preferably $3.0 \times 10^{-2}$, more preferably $2.0 \times 10^{-2}$, more preferably $1.0 \times 10^{-2}$, more preferably $8.0 \times 10^{-3}$, more preferably $6.0 \times 10^{-3}$, more preferably $4.0 \times 10^{-3}$, more preferably $2.0 \times 10^{-3}$, more preferably $1.0 \times 10^{-3}$, more preferably $8.0 \times 10^{-4}$, more preferably $6.0 \times 10^{-4}$, more preferably $4.0 \times 10^{-4}$, more preferably $2.0 \times 10^{-4}$, more preferably $1.0 \times 10^{-4}$. Thus, the quality of the bundle can be further improved. The bundle is especially suitable for the production of syringes and cartridges, if the value b [$\mu$m/$\mu$m] is $1.0 \times 10^{-3}$, preferably $8.0 \times 10^{-4}$, more preferably $6.0 \times 10^{-4}$, more preferably $4.0 \times 10^{-4}$, more preferably $2.0 \times 10^{-4}$, more preferably $1.0 \times 10^{-4}$.

The lower value of the parameter ii) is not particularly limited. However, if the value is too low, the effort to reach this value exceeds the benefit. Thus, preferably the following equation is fulfilled:

$$\text{v)} \quad c \leq \left(I_{continuous}(max) - I_{continuous}(min)\right) / I_{center}(mean);$$

wherein c [$\mu$m/$\mu$m] is $1.0 \times 106^{-6}$, preferably $1.0 \times 10^{-5}$, more preferably $1.0 \times 10^{-4}$, more preferably $1.0 \times 10^{-3}$, more preferably $1.0 \times 10^{-2}$.

Preferably, the following equation is fulfilled:

$$\text{vi)} \quad \left(I_{continuous}(max) - I_{continuous}(min)\right) / I_{center}(mean) \leq d;$$

wherein d [$\mu$m/$\mu$m] is $4.0 \times 10^{-2}$, preferably $3.0 \times 10^{-2}$, more preferably $2.0 \times 10^{-2}$, more preferably $1.0 \times 10^{-2}$, more preferably $8.0 \times 10^{-3}$, more preferably $6.0 \times 10^{-3}$, more preferably $4.0 \times 10^{-3}$, more preferably $2.0 \times 10^{-3}$, more preferably $1.0 \times 10^{-3}$, more preferably $8.0 \times 10^{-4}$, more preferably $6.0 \times 10^{-4}$, more preferably $4.0 \times 10^{-4}$, more preferably $2.0 \times 10^{-4}$, more preferably $1.0 \times 10^{-4}$. Thus the quality of the bundle can be further improved. The bundle is especially suitable for the production of syringes and cartridges, if the value d is $1.0 \times 10^{-3}$, preferably $8.0 \times 10^{-4}$, more preferably $6.0 \times 10^{-4}$, more preferably $4.0 \times 10^{-4}$, more preferably $20 \times 10^{-4}$, more preferably $1.0 \times 10^{-4}$.

The mean of the center inner diameters of the cylindrical portions of all cut elongated glass elements in the bundle ($I_{center}(mean)$) is not particularly limited. Preferably, $I_{center}(mean)$ is 2 mm or more, preferably 3 mm or more, more preferably 4 mm or more, more preferably 6 mm or more, more preferably 8 mm or more, more preferably 10 mm or more, more preferably 12 mm or more, more preferably 14 mm or more, more preferably 16 mm or more, more preferably 18 mm or more, more preferably 20 mm or more, more preferably 22 mm or more; and/or, preferably and, $I_{center}(mean)$ is 100 mm or less, preferably 75 mm or less, more preferably 50 mm or less, more preferably 40 mm or less, more preferably 30 mm or less, more preferably 25 mm or less, more preferably 20 mm or less, more preferably 17 mm or less, more preferably 15 mm or less, more preferably 11 mm or less, more preferably 9 mm or less, more preferably 8 mm or less, more preferably 7 mm or less, more preferably 6 mm or less, more preferably 5 mm or less, more preferably 4 mm or less, more preferably 3 mm or less. The bundle is especially suitable for the production of syringes and cartridges, if the $I_{center}(mean)$ is 4 mm or more, preferably 6 mm or more, more preferably 8 mm or more, more preferably 10 mm or more; and 30 mm or less, preferably 25 mm or less, more preferably 20 mm or less, more preferably 17 mm or less, more preferably 15 mm or less.

The value for ($I_{center}(max) - I_{center}(min)$) is not particularly limited. Preferably, ($I_{center}(max) - I_{center}(min)$) is 200 $\mu$m or less, preferably 150 $\mu$m or less, more preferably 120 $\mu$m or less, more preferably 110 $\mu$m or less, more preferably 100 $\mu$m or less, more preferably 90 $\mu$m or less, more preferably 80 $\mu$m or less, more preferably 70 $\mu$m or less, more preferably 65 $\mu$m or less, more preferably 60 $\mu$m or less, more preferably 55 $\mu$m or less, more preferably 50 $\mu$m or less, more preferably 45 $\mu$m or less, more preferably 40 $\mu$m or less, more preferably 35 $\mu$m or less, more preferably 30 $\mu$m or less, more preferably 25 $\mu$m or less, more preferably 20 $\mu$m or less, more preferably 15 $\mu$m or less, more preferably 10 $\mu$m or less, more preferably 5 $\mu$m or less. Thus, the quality of the bundle can is further improved. Especially a value of 50 $\mu$m or less, preferably 45 $\mu$m or less, more preferably 40 $\mu$m or less, more preferably 35 $\mu$m or less, more preferably

30 $\mu$m or less, more preferably 25 $\mu$m or less, more preferably 20 $\mu$m or less, more preferably 15 $\mu$m or less, more preferably 10 $\mu$m or less, more preferably 5 $\mu$m or less, is preferred to improve the suitability of the bundle for the production of syringes and cartridges.

The value for ($I_{center}$(max) - $I_{center}$(mean)) and ($I_{center}$(mean) - $I_{center}$(min)) are not particularly limited. Preferably, one or more of the following equation(s) is/are fulfilled:

$$vii) \quad \left(I_{center}(max) - I_{center}(mean)\right) \leq e;$$

wherein e is 100 $\mu$m, preferably 80 $\mu$m, more preferably 70 $\mu$m, more preferably 60 $\mu$m, more preferably 50 $\mu$m, more preferably 40 $\mu$m, more preferably 30 $\mu$m, more preferably 20 $\mu$m, more preferably 15 $\mu$m, more preferably 10 $\mu$m, more preferably 5 $\mu$m, more preferably 2 $\mu$m; and/or, preferably and,

$$viii) \quad \left(I_{center}(mean) - I_{center}(min)\right) \leq f;$$

wherein f is 100 $\mu$m, preferably 80 $\mu$m, more preferably 70 $\mu$m, more preferably 60 $\mu$m, more preferably 50 $\mu$m, more preferably 40 $\mu$m, more preferably 30 $\mu$m, more preferably 20 $\mu$m, more preferably 15 $\mu$m, more preferably 10 $\mu$m, more preferably 5 $\mu$m, more preferably 2 $\mu$m.

Thus, the quality of the bundle can be further improved. The amount and frequency, respectively, of the continuous measurement are not particularly limited. Preferably, $I_{continuous}$(max) and/or $I_{continuous}$(min) and/or the one or more geometric parameter(s) is/are measured every 20 cm or less, preferably 0.01 cm to 10 cm, more preferably 0.05 to 2 cm, more preferably 0.1 to 1 cm, more preferably every 1.0 mm, along the rotation axis of the elongated glass elements and/or tube. Thus, the quality of the bundle and the reliability of the measurement can be further improved.

According to the invention, the bundle comprises 5 or more cut elongated glass elements. Preferably, the bundle comprises, preferably exhibits, 5 or more, preferably 10 or more, more preferably 25 or more, more preferably 25 or more, more preferably 35 or more, more preferably 50 or more, more preferably 60 or more, more preferably 75 or more, more preferably 90 or more, more preferably 100 or more, cut elongated glass elements; and/or, preferably and, 1000 or less, preferably 800 or less, more preferably 700 or less, more preferably 600 or less, more preferably 500 or less, more preferably 400 or less, more preferably 300 or less, more preferably 200 or less, more preferably 150 or less, more preferably 120 or less, more preferably 100 or less, cut elongated glass elements. The more cut elongated glass elements are in a bundle the more difficult it is that each cut elongated glass elements fulfills the parameters described herein; especially, if the bundle comprises 50 or more, preferably 75 or more, more preferably 100 or more, cut elongated glass elements.

In a (preferred) embodiment of the invention, the cut elongated glass elements are inspected by a method and/or system according to any embodiment described herein. Thus, a bundle having improved quality is obtained.

In preferred embodiment the continuous inner diameter and/or, preferably and, the individual inner diameter of the cut elongated glass elements is/are obtainable by, preferably obtained by, a method and /or system according to any embodiment described herein. Thus, the geometric parameter(s) are reliably measured and thus, the quality of the bundle can be improved.

If the or one of the geometric parameter(s) is/are the inner diameter, the inner diameter can be determined with different methods. Preferably, the inner diameter I and/or $I_{center}$(mean), is/are the average, maximum and/or minimum, preferably the average, of two or more, preferably 2 to 20, more preferably 2, 3, 4, 5 or 6, measurements of the inner diameter, preferably perpendicular to each other or equally distributed, at the respective point along the rotation axis of the elongated glass element; and/or wherein the $I_{center}$(max) and $I_{continuous}$(max), respectively, is/are the average, maximum and/or minimum, preferably the maximum, of two or more, preferably 2 to 20, more preferably 2, 3, 4, 5 or 6, measurements of the inner diameter, preferably perpendicular to each other or equally distributed, at the respective point along the rotation axis of the elongated glass element; and/or wherein the $I_{center}$(min), and/or $I_{continuous}$(min) is/are the average, maximum and/or minimum, preferably the minimum, of two or more, preferably 2 to 20, more preferably 2, 3, 4, 5 or 6, measurements of the inner diameter, preferably perpendicular to each other or equally distributed, at the respective point along the rotation axis of the elongated glass element. The inventors recognized that it is sufficient to determine the inner diameters based on two values being perpendicular to each other to reliably determine the specific inner diameter at a point along the rotation axis of the elongated glass element. If more than two inner diameters are used to determine the inner diameter, the reliability can be further improved.

In a further preferred embodiment, the inner diameter I, preferably Icenter(max), $I_{center}$(min), $I_{center}$(mean), $I_{continuous}$(max) and/or $I_{continuous}$(min) is/are determinable, preferably determined, by the following equation:

$$\text{ix)} \qquad I = O - (2 * W)$$

wherein the outer diameter O is measurable, preferably measured, by laser scanning or telecentric line camera systems; and

wherein the wall thickness W is measurable, preferably measured, by an interferometer, preferably in the same direction as the outer diameter O; and/or

the inner diameter I, preferably $I_{center}(max)$, $I_{center}(min)$, $I_{center}(mean)$, $I_{continuous}(max)$ and/or $I_{continuous}(min)$ is/are determinable, preferably determined, by an interferometer. Thus, the reliability of the measurement of the inner diameter can be further improved and the inner diameter can be reliably determined in the $\mu$m range. The inventors recognized that especially if an interferometer is used to determine the wall thickness and thus inner diameter, the reliability of measurement in the $\mu$m range can be further improved. The inner diameter can also be directly measured by an interferometer, especially for small inner diameters (e.g. 5 cm or less, preferably 3 cm or less, more preferably 2 cm or less).

The number of values obtained in the measurements is not particularly limited. Preferably, the number of measurements of the one or more geometric parameter(s) for each cut elongated glass element is 5 to $1*10^{10}$, preferably 10 to $10^5$, more preferably 50 to $10^4$, more preferably 100 to 1000. Thus, the quality can be further improved.

The glass is not particularly limited. Preferably, the glass is a borosilicate glass, an aluminosilicate glass, a lithium-aluminosilicate (LAS) glass, a soda-lime glass, or a lead glass, preferably a borosilicate glass; and/or the glass is a Type I glass according to ASTM E 438 and/or European Pharmaocopeia. Thus, a bundle comprising high quality cut elongated glass elements being suitable for the production of pharmaceutical packing is provided.

The composition of the glass is not particularly limited. Preferably, the composition of the glass comprises, in mass-%:

| | |
|---|---|
| Si: | 30 to 98 %, preferably 50 to 90 %, more preferably 70.0 to 74.0 %; and/or |
| $B_2O_3$: | 0 to 30 %, preferably 3 to 20 %, more preferably 7.0 to 16.0 %; and/or |
| $Al_2O_3$: | 0 to 30 %, preferably 1 to 15 %, more preferably 3.0 to 6.5 %; and/or |
| $X_2O$: | 0 to 30 %, preferably 1 to 15 %, more preferably 2.0 to 7.2 %, wherein X is selected from Na, K, Li, preferably X is Na and/or K; and/or |
| YO: | 0 to 30 %, preferably 0.1 to 5 %, more preferably 0.5 to 1.0 %, wherein Y is selected from Ca, Mg, Ba, preferably Y is Ca and/or Mg. |

In a further preferred embodiment, the composition of the glass consist of, in mass-%:

| | |
|---|---|
| Si: | 30 to 98 %, preferably 50 to 90 %, more preferably 70.0 to 74.0 %; |
| $B_2O_3$: | 0 to 30 %, preferably 3 to 20 %, more preferably 7.0 to 16.0 %; |
| $Al_2O_3$: | 0 to 30 %, preferably 1 to 15 %, more preferably 3.0 to 6.5 %; |
| $X_2O$: | 0 to 30 %, preferably 1 to 15 %, more preferably 2.0 to 7.2 %, wherein X is selected from Na, K, Li, preferably X is Na and/or K; |
| YO: | 0 to 30 %, preferably 0.1 to 5 %, more preferably 0.5 to 1.0 %, wherein Y is selected from Ca, Mg, Ba, preferably Y is Ca and/or Mg; and unavoidable impurities. |

In a further preferred embodiment, the composition of the glass comprises, in mass-%:

| | |
|---|---|
| Si: | 20 to 98 %, preferably 40 to 75 %, more preferably 50 to 65 %; and/or |
| $B_2O_3$: | 0 to 30 %, preferably 1 to 15 %, more preferably 3 to 9 %; and/or |
| $Al_2O_3$: | 0 to 30 %, preferably 10 to 20 %, more preferably 13 to 18; and/or |
| $X_2O$: | 0 to 30 %, preferably 0 to 5 %, more preferably 0 to 3 %, wherein X is selected from Na, K, Li, preferably X is Na and/or K; and/or |
| YO: | 0 to 50 %, preferably 0.1 to 40 %, more preferably 10 to 35, wherein Y is selected from Ca, Mg, Ba, preferably Y is Ca and/or Mg. |

In a further preferred embodiment, the composition of the glass consist of, in mass-%:

Si:        20 to 98 %, preferably 40 to 75 %, more preferably 50 to 65 %;

$B_2O_3$:    0 to 30 %, preferably 1 to 15 %, more preferably 3 to 9 %;

$Al_2O_3$:   0 to 30 %, preferably 10 to 20 %, more preferably 13 to 18;

$X_2O$:     0 to 30 %, preferably 0 to 5 %, more preferably 0 to 3 %, wherein X is selected from Na, K, Li, preferably X is Na and/or K;

YO:     0 to 50 %, preferably 0.1 to 40 %, more preferably 10 to 35, wherein Y is selected from Ca, Mg, Ba, preferably Y is Ca and/or Mg; and

         unavoidable impurities.

The shape of the elongated glass element is not particularly limited, preferably the elongated glass element is a tube or rod, preferably a tube; and/or the cut elongated glass elements is a cut glass tube, a cut glass rod or a glass pharmaceutical packaging; and/or wherein the cut elongated glass elements is a cut glass tube comprising a first end, a cylindrical portion and/or, preferably and, a second end, wherein the first and/or second end are open or closed, preferably wherein the first end and second end are open or closed.

In a preferred embodiment, the elongated glass element is a tube or rod, preferably a tube, wherein the length of the tube or rod is not particularly limited. Preferably, the cut elongated glass element is a tube or rod and/or, preferably and, comprises a first end, a second end and cylindrical portion, and the length of the cylindrical portion of the cut elongated glass element is 1 cm or more and 1000 cm or less, preferably 20 cm or more and 400 cm or less, more preferably 60 cm or more and 300 cm or less, more preferably 100 cm or more and 200 cm or less, more preferably 120 cm or more and 180 cm or less. Especially, if the length is 200 cm or less, preferably 180 cm or less, the one or more geometric parameter(s) can be reliably determined. Thus, the quality of the bundle can be further improved.

The bundle of tubes can be used to produce a plurality of pharmaceutical packagings. These pharmaceutical packagings, in turn, can be packed in a bundle as well. Thus, a bundle having the same or even better quality with regard to one or more geometric parameter(s), preferably the inner diameter, can be obtained, wherein the cut elongated glass element is a pharmaceutical packaging. Thus, in a preferred embodiment, the cut elongated glass element is a pharmaceutical packaging and/or, preferably and, comprises a first end, a second end and cylindrical portion, and the length of the cylindrical portion of the cut elongated glass element is 1 mm or more and 50 cm or less, preferably 0.5 cm or more and 40 cm or less, more preferably 1.0 cm or more and 30 cm or less, more preferably 2 cm or more and 20 cm or less, more preferably 3 cm or more and 15 cm or less, more preferably 4 cm or more and 12 cm or less, more preferably 5 cm or more and 10 cm or less, more preferably 6 cm or more and 8 cm or less.

In a preferred embodiment, the elongated glass element comprises a cylindrical portion, which exhibits an outer diameter of 0.5 mm to 500 mm, preferably 2 mm to 63 mm, more preferably 5 mm to 60 mm, more preferably 6 mm to 50 mm; and/or the elongated glass element comprises a cylindrical portion, wherein the cylindrical portion is a tube and exhibits a wall thickness of 0.001 mm to 250 mm, preferably 0.1 mm to 32.5 mm, more preferably 0.2 mm to 30 mm, more preferably 0.25 mm to 25 mm. Thus, the inner diameter can be reliably determined and the quality of the measurement or bundle is further improved.

Another aspect of the invention is a pharmaceutical packaging producible, preferably produced, from one or more cut elongated glass elements of the bundle described herein.

A further aspect of the invention is the use of one or more cut elongated glass elements of the bundle described herein to produce a pharmaceutical packaging or a technical glass, preferably a pharmaceutical packaging.

The kind of the pharmaceutical packaging is not particularly limited. Preferably, the pharmaceutical packaging is a vial, ampule, syringe and/or cartridge, more preferably a syringe or cartridge.

Herein, all preferred embodiments of the method also apply for the system, the bundle and the use described herein and vice versa.

Unavoidable impurities herein are impurities, which may be contained in the educts, e.g. Fe, Ti, Zn, Cu, Mn, Co. Preferably, the total amount of all unavoidable impurities is 5 wt.-% or less, preferably 2.5 wt.-% or less, more preferably 1.0 wt.-% or less, more preferably 0.5 wt.-% or less, more preferably 0.1 wt.-% or less, more preferably 0.01 wt.-% or less.

The cut elongated glass elements are preferably packed in a bundle. Herein, a bundle is a trading, loading or packaging unit for distribution of cut elongated glass elements, preferably empty cut elongated glass elements, i.e. cut elongated glass elements filled with a gas, e.g. air. For example, products usually, but not necessarily, of the same kind are combined as bundles when ordered together in retail or bundled in logistics. According to the invention, the cut elongated glass elements can be separated by a spacer, for example a plastic and/or paper sheet or fixed in a carrier plate, so that they are not in contact with each other during transport. Usually, but not necessarily, the bundle is at least partly covered by a plastic foil. An example of a bundle is the DENSOPACK® or the SCHOTT iQ® platform from SCHOTT AG. Preferably, several, e.g. 2 to 1000 bundles, preferably 20 to 200 bundles are stacked on a pallet. Thus, according to one aspect of the invention, a pallet comprises 2 to 1000 bundles, preferably 20 to 200 bundles, according to any embodiment described herein.

Herein, the center of cylindrical portion of the circular elongated glass element is center $\pm$ 10%, preferably $\pm 7\%$, more preferably $\pm 5\%$, more preferably $\pm 3\%$, of the length of the cylindrical portion of the circular elongated glass element, more preferably is the center of the circular elongated glass element.

The interferometer is not particularly limited. Preferably, for the measurement an interferometric CHRocodile system from Precitec Optronik GmbH is used.

Herein an elongated glass element is an element that comprises a cylindrical portion, preferably only one cylindrical portion. Preferably, the elongated glass element is a circular elongated glass element. The rotation axis of the circular elongated glass element is defined by the rotation axis of the cylindrical portion of the circular elongated glass element. The cylindrical portion of the circular elongated glass element might be hollow. Moreover, the cut elongated glass element might exhibit an open and/or a closed end and/or a narrowing and/or broadening. Preferably, the circular elongated glass element is a tube or a rod, preferably a tube.

The predetermined range might be any range. If the predetermined range is for example a length in mm, a predetermined range might be a single value in mm $\pm$ 30 %, preferably $\pm 20$ %, more preferably $\pm 10$ %, more preferably $\pm 5$ %, more preferably $\pm 3$ %, more preferably $\pm 1$ %.

Herein, the point where the molten glass solidifies is the point at which the temperature of the material of the (cut) circular elongated glass element reached the glass transition temperature of the material. If not stated otherwise, the glass transition temperature is measured by differential scanning calorimetry (DSC).

There are several ways how to design and further develop the teaching of the present invention in an advantageous way. To this end, it is to be referred to the patent claims subordinate to the independent patent claims, to the above explanation(s) of preferred embodiments, the following items, and the following examples of embodiments illustrated by the figure(s). The combination of two or more, for example 2, 3, 4 or 5 preferred embodiment is more preferred. In summary, especially preferred embodiments are the following items:

1. Method for obtaining cut elongated glass elements, comprising the steps, preferably in this order:

- providing a continuous elongated glass element, preferably by a providing apparatus;
- continuously measuring one or more geometric parameter(s) of the continuous elongated glass element to obtain one or more continuous geometric parameter(s), preferably by a first measuring apparatus;
- cutting the continuous elongated glass element to obtain cut elongated glass elements, preferably by a cutting device;
- measuring one or more geometric parameter(s) at one or more point(s) along the rotation axis of the cut elongated glass element(s), preferably the cut elongated glass elements, to obtain one or more individual geometric parameter(s), preferably by a second measuring apparatus; and
- connecting the one or more of the continuous geometric parameter(s) with the one or more of the individual geometric parameter(s), preferably by a computer unit.

2. Method, according to any one of the preceding items, comprising the following steps, preferably in this order:

- providing a continuous elongated glass element;
- continuously measuring one or more geometric parameter(s) of the continuous elongated glass element to obtain one or more continuous geometric parameter(s);
- cutting the continuous elongated glass element to obtain cut elongated glass elements;
- sorting out cut elongated glass element(s) exhibiting one or more continuous geometric parameter(s) being not inside a predetermined range;
- measuring one or more geometric parameter(s) at one or more point(s) along the rotation axis of the cut elongated glass element(s) to obtain one or more individual geometric parameter(s);
- connecting the one or more of the continuous geometric parameter(s) with the one or more of the individual geometric parameter(s), preferably controlling whether the cut elongated glass element(s) having one or more of the continuous geometric parameter(s) being not inside a predetermined range has/have been sorted out; and
- preferably sorting out cut elongated glass element(s) exhibiting one or more continuous geometric parameter(s) and/or one or more of the individual geometric parameter(s) being not inside a predetermined range.

3. Method, according to any one of the preceding items:

wherein providing a continuous elongated glass element comprises the steps:

- providing a continuous elongated glass element by a Danner or a Vello process, preferably by a Danner process; and

- continuously drawing the continuous elongated glass element by a drawing device, preferably wherein the continuous elongated glass element is continuously drawn while the continuous elongated glass element is continuously measured; and/or

preferably wherein for the connection of the one or more continuous geometric parameter(s) with the one or more individual geometric parameter(s), the speed of the drawing device is used.

4. Method, according to any one of the preceding items:

wherein the cutting the continuous elongated glass element to obtain cut elongated glass elements is performed by a cutting device;
preferably wherein for the connection of the one or more continuous geometric parameter(s) with the one or more of the individual geometric parameter(s), the point in time of the cutting in the cutting step is used.

5. Method according to any one of the preceding items, comprising the further step(s):

- using the one or more continuous geometric parameter(s) and/or the one or more individual geometric parameter(s) to identify the cut elongated glass element, preferably at a later production step or the final product; and/or
- bundling the cut elongated glass elements to form a bundle comprising cut elongated glass elements; and/or
- producing one or more, preferably 5 or more, pharmaceutical packaging(s) out of the cut elongated glass element(s); preferably and bundling the pharmaceutical packaging(s) to form a bundle of pharmaceutical packaging(s).

6. System for obtaining cut elongated glass elements, preferably and for performing the method according to any one of the preceding items, comprising:

- a providing apparatus configured for providing a continuous elongated glass element;
- a first measuring apparatus configured for continuously measuring one or more geometric parameter(s) of the continuous elongated glass element to obtain one or more continuous geometric parameter(s);
- a cutting device configured for cutting the continuous elongated glass element to obtain cut elongated glass elements;
- a second measuring apparatus configured for measuring one or more geometric parameter(s) at one or more point(s) along the rotation axis of the cut elongated glass element(s) to obtain one or more individual geometric parameter(s); and
- a computer unit configured for connecting the one or more of the continuous geometric parameter(s) with the one or more of the individual geometric parameter(s).

7. System for obtaining cut elongated glass elements, preferably and for performing the method according to any one of the preceding items, and/or preferably according to any one of the preceding items; comprising:

- a providing apparatus configured for providing a continuous elongated glass element;
- a first measuring apparatus configured for continuously measuring one or more geometric parameter(s) of the continuous elongated glass element to obtain one or more continuous geometric parameter(s);
- a cutting device configured for cutting the continuous elongated glass element to obtain cut elongated glass elements;
- a sorting device configured for sorting out cut elongated glass element(s) exhibiting one or more continuous geometric parameter(s) being not inside a predetermined range;
- a second measuring apparatus configured for measuring one or more geometric parameter(s) at one or more point(s) along the rotation axis of the cut elongated glass element(s) to obtain one or more individual geometric parameter(s);
- a computer unit configured for connecting the one or more of the continuous geometric parameter(s) with the one or more of the individual geometric parameter(s), preferably for controlling whether the cut elongated glass element(s) having one or more continuous geometric parameter(s) being not inside a predetermined range has/have been sorted out; and
- preferably a further sorting device sorting out cut elongated glass element(s) exhibiting one or more continuous geometric parameter(s) and/or one or more of the individual geometric parameter(s) being not inside a predetermined range.

8. System according to any one of the preceding items, further comprising a drawing device;
wherein the computer unit uses the speed of the drawing device and/or the point in time of the cutting in the cutting step for connecting the one or more of the continuous geometric parameter(s) with the one or more of the individual geometric parameter(s).

9. Method and/or system according to any one of the preceding items,

wherein the continuous elongated glass element is provided by the Danner or the Vello process, preferably by the Danner process,

preferably and wherein the continuous elongated glass element is continuously, preferably and contactless, drawn, preferably through the first measuring apparatus by a/the drawing device, while the one or more continuous geometric parameter(s) are measured.

10. Method and/or system according to any one of the preceding items,
wherein cutting the continuous elongated glass element to obtain cut elongated glass elements is cutting the continuous elongated glass element by scribing the continuous elongated glass element to obtain micro scratches and subsequently breaking the continuous elongated glass element at the micro scratches to obtain cut elongated glass elements.
11. Method and/or system according to any one of the preceding items,

wherein the cut elongated glass element comprises a first end, a second end and a cylindrical portion, and/or wherein the one or more point(s) along the rotation axis of the cut elongated glass element(s) is/are the first end, the second end and/or the center, preferably the center, of the cylindrical portion of the respective cut elongated glass element.

12. Method and/or system according to any one of the preceding items,
wherein the time between the continuous measurement and the measurement at one or more point(s) along the rotation axis is 1 year or less, preferably 30 days or less, more preferably 7 days or less, preferably 1 day or less, more preferably 12 hours or less, more preferably 6 hours or less, more preferably 1 hour or less, more preferably 30 min or less, more preferably 15 min or less, more preferably 5 min or less, more preferably 2 min or less.
13. Method and/or system according to any one of the preceding items,

wherein the one or more geometric parameter(s) comprise(s), preferably is/are, the inner diameter I, the outer diameter, the ovality and/or the wall thickness; more preferably comprise, more preferably is, the inner diameter I; and/or
wherein the one or more geometric parameter(s) comprise two or more, preferably 3 or more, more preferably 4 or more, more preferably 5 or more geometric parameters.

14. Method and/or system according to any one of the preceding items,

wherein the one or more individual geometric parameter(s) comprise(s), preferably is/are, the individual inner diameter, the individual outer diameter, the individual ovality and/or the individual wall thickness; more preferably comprises, more preferably is, the individual inner diameter; and/or
wherein the one or more continuous geometric parameter(s) is/are the continuous inner diameter, the continuous outer diameter, the continuous ovality and/or the continuous wall thickness; more preferably comprises, more preferably is, the continuous inner diameter $I_{continuous}$; and/or
wherein the one or more individual geometric parameter(s) is/are the center inner diameter, the center outer diameter, the center ovality and/or the center wall thickness, preferably the center inner diameter Center; and/or
wherein the one or more geometric parameter(s) obtained by the continuous measurement and the one or more geometric parameter(s) obtained by the measurement at one or more point(s) are the same, preferably are the continuous inner diameter $I_{continuous}$ and the individual inner diameter, more preferably the center inner diameter $I_{center}$.

15. Method and/or system according to any one of the preceding items,
wherein the continuous measurement comprises a measurement with an interferometer.
16. Method and/or system according to any one of the preceding items,
wherein the measurement at one or more point(s) along the rotation axis comprises a measurement with an interferometer.
17. Method and/or system according to any one of the preceding items,
wherein connecting the one or more of the continuous geometric parameter(s) with the one or more of the individual geometric parameter(s) is one or more of:

- calibrating, preferably continuously calibrating, the continuous measurement based on the measurement at one or more point(s) along the rotation axis; and/or
- adapting, preferably continuously adapting, the one or more continuous geometric parameter(s) based on the one or more individual geometric parameter(s); and/or
- calibrating preferably continuously calibrating, the measurement at one or more point(s) along the rotation axis based on the continuous measurement; and/or
- adapting, preferably continuously adapting, the one or more individual geometric parameter(s) based on the one or more continuous geometric parameter(s); and/or
- comparing and/or assigning the one or more continuous geometric parameter(s) with/to the one or more individual geometric parameter(s); and/or
- comparing and/or assigning the one or more individual geometric parameter(s) with/to the one or more continuous geometric parameter(s); and/or
- connecting the one or more parameter(s) to obtain information about the quality of a cut elongated glass element with respect to the one or more geometric parameter(s).

18. Bundle comprising 5 or more cut elongated glass elements,

wherein each cut elongated glass element comprises:

a) a first end,
b) a cylindrical portion, and
c) a second end;

wherein one or more of the following equation(s) is/are fulfilled:

$$i) \quad (I_{center}(max) - I_{center}(min)) / I_{center}(mean) \leq 4.0 \times 10^{-2} \ [\mu m / \mu m];$$

and/or

$$ii) \quad (I_{continuous}(max) - I_{continuous}(min)) / I_{center}(mean) \leq 4.0 \times 10^{-2} \ [\mu m / \mu m];$$

wherein $I_{center}(max)$ is the maximum center inner diameter of the cylindrical portions of all cut elongated glass elements in the bundle;
wherein $I_{center}(min)$ is the minimum center inner diameter of the cylindrical portion of all cut elongated glass elements in the bundle;
wherein $I_{center}(mean)$ is the mean of the inner diameters at the center of the cylindrical portions of all cut elongated glass elements in the bundle;
wherein $I_{continuous}(max)$ is the maximum continuous inner diameter of the cylindrical portion of any single cut elongated glass element in the bundle; and
wherein $I_{continuous}(min)$ is the minimum continuous inner diameter of the cylindrical portion of said single cut elongated glass element in the bundle.

19. Bundle according to any one of the preceding items,

wherein the following equation is fulfilled:

$$iii) \quad a \leq (I_{center}(max) - I_{center}(min)) / I_{center}(mean);$$

wherein $a \ [\mu m / \mu m]$ is $1.0 \times 10^{-6}$, preferably $1.0 \times 10^{-5}$, more preferably $1.0 \times 10^{-4}$, more preferably $1.0 \times 10^{-3}$, more preferably $1.0 \times 10^{-2}$.

20. Bundle according to any one of the preceding items,

wherein the following equation is fulfilled:

$$iv) \quad (I_{center}(max) - I_{center}(min)) / I_{center}(mean) \leq b;$$

wherein b [$\mu$m/$\mu$m] is $4.0\times10^{-2}$, preferably $3.0\times10^{-2}$, more preferably $2.0\times10^{-2}$, more preferably $1.0\times10^{-2}$, more preferably $8.0\times10^{-3}$, more preferably $6.0\times10^{-3}$, more preferably $4.0\times10^{-3}$, more preferably $2.0\times10^{3}$, more preferably $1.0\times10^{-3}$, more preferably $8.0\times10^{-4}$, more preferably $6.0\times10^{-4}$, more preferably $4.0\times10^{-4}$, more preferably $2.0\times10^{-4}$, more preferably $1.0\times10^{-4}$.

21. Bundle according to any one of the preceding items,

wherein the following equation is fulfilled:

$$v) \quad c \leq \left(I_{continuous}(max) - I_{continuous}(min)\right) / I_{center}(mean);$$

wherein c [$\mu$m/$\mu$m] is $1.0\times10^{-6}$, preferably $1.0\times10^{-5}$, more preferably $1.0\times10^{-4}$, more preferably $1.0\times10^{-3}$, more preferably $1.0\times10^{-2}$.

22. Bundle according to any one of the preceding items,

wherein the following equation is fulfilled:

$$vi) \quad \left(I_{continuous}(max) - I_{continuous}(min)\right) / I_{center}(mean) \leq d;$$

wherein d [$\mu$m/$\mu$m] is $4.0\times10^{-2}$, preferably $3.0\times10^{-2}$, more preferably $2.0\times10^{-2}$, more preferably $1.0\times10^{-2}$, more preferably $8.0\times10^{-3}$, more preferably $6.0\times10^{-3}$, more preferably $4.0\times10^{-3}$, more preferably $2.0\times10^{3}$, more preferably $1.0\times10^{-3}$, more preferably $8.0\times10^{-4}$, more preferably $6.0\times10^{-4}$, more preferably $4.0\times10^{-4}$, more preferably $2.0\times10^{-4}$, more preferably $1.0\times10^{-4}$.

23. Bundle according to any one of the preceding items,

wherein $I_{center}(mean)$ is 2 mm or more, preferably 3 mm or more, more preferably 4 mm or more, more preferably 6 mm or more, more preferably 8 mm or more, more preferably 10 mm or more, more preferably 12 mm or more, more preferably 14 mm or more, more preferably 16 mm or more, more preferably 18 mm or more, more preferably 20 mm or more, more preferably 22 mm or more; and/or, preferably and,
wherein $I_{center}(mean)$ is 100 mm or less, preferably 75 mm or less, more preferably 50 mm or less, more preferably 40 mm or less, more preferably 30 mm or less, more preferably 25 mm or less, more preferably 20 mm or less, more preferably 17 mm or less, more preferably 15 mm or less, more preferably 11 mm or less, more preferably 9 mm or less, more preferably 8 mm or less, more preferably 7 mm or less, more preferably 6 mm or less, more preferably 5 mm or less, more preferably 4 mm or less, more preferably 3 mm or less.

24. Bundle according to any one of the preceding items,
wherein $(I_{center}(max) - I_{center}(min))$ is 200 $\mu$m or less, preferably 150 $\mu$m or less, more preferably 120 $\mu$m or less, more preferably 110 $\mu$m or less, more preferably 100 $\mu$m or less, more preferably 90 $\mu$m or less, more preferably 80 $\mu$m or less, more preferably 70 $\mu$m or less, more preferably 65 $\mu$m or less, more preferably 60 $\mu$m or less, more preferably 55 $\mu$m or less, more preferably 50 $\mu$m or less, more preferably 45 $\mu$m or less, more preferably 40 $\mu$m or less, more preferably 35 $\mu$m or less, more preferably 30 $\mu$m or less, more preferably 25 $\mu$m or less, more preferably 20 $\mu$m or less, more preferably 15 $\mu$m or less, more preferably 10 $\mu$m or less, more preferably 5 $\mu$m or less.
25. Bundle according to any one of the preceding items,
wherein one or more of the following equation(s) is/are fulfilled:

$$vii) \quad \left(I_{center}(max) - I_{center}(mean)\right) \leq e;$$

wherein e is 100 $\mu$m, preferably 80 $\mu$m, more preferably 70 $\mu$m, more preferably 60 $\mu$m, more preferably 50 $\mu$m, more preferably 40 $\mu$m, more preferably 30 $\mu$m, more preferably 20 $\mu$m, more preferably 15 $\mu$m, more preferably 10 $\mu$m, more preferably 5 $\mu$m, more preferably 2 $\mu$m; and/or, preferably and,

$$viii) \quad \left(I_{center}(mean) - I_{center}(min)\right) \leq f;$$

wherein f is 100 $\mu$m, preferably 80 $\mu$m, more preferably 70 $\mu$m, more preferably 60 $\mu$m, more preferably 50 $\mu$m, more preferably 40 $\mu$m, more preferably 30 $\mu$m, more preferably 20 $\mu$m, more preferably 15 $\mu$m, more preferably 10 $\mu$m, more preferably 5 $\mu$m, more preferably 2 $\mu$m.

26. Bundle according to any one of the preceding items,

wherein $I_{continuous}(max)$ and/or $I_{continuous}(min)$ and/or the one or more geometric parameter(s) is/are measured every 20 cm or less, preferably 0.01 cm to 10 cm, more preferably 0.05 to 2 cm, more preferably 0.1 to 1 cm, more preferably every 1.0 mm, along the rotation axis of the elongated glass elements and/or tube.

27. Bundle according to any one of the preceding items,

wherein the bundle comprises, preferably exhibits, 5 or more, preferably 10 or more, more preferably 25 or more, more preferably 25 or more, more preferably 35 or more, more preferably 50 or more, more preferably 60 or more, more preferably 75 or more, more preferably 90 or more, more preferably 100 or more, cut elongated glass elements; and/or, preferably and, 1000 or less, preferably 800 or less, more preferably 700 or less, more preferably 600 or less, more preferably 500 or less, more preferably 400 or less, more preferably 300 or less, more preferably 200 or less, more preferably 150 or less, more preferably 120 or less, more preferably 100 or less, cut elongated glass elements.

28. Bundle comprising 5 or more cut elongated glass elements, preferably according to any one of the preceding items, wherein the cut elongated glass elements are inspected by a method and/or system according to any one of the preceding items.

29. Bundle according to any one of the preceding items,

wherein the continuous inner diameter and/or, preferably and, the individual inner diameter of the cut elongated glass elements is/are obtainable by, preferably obtained by, a method and /or system according to any one of the preceding items.

30. Method, system and/or bundle; according to any one of the preceding items,

wherein the inner diameter I and/or $I_{center}(mean)$, is/are the average, maximum and/or minimum, preferably the average, of two or more, preferably 2 to 20, more preferably 2, 3, 4, 5 or 6, measurements of the inner diameter, preferably perpendicular to each other or equally distributed, at the respective point along the rotation axis of the elongated glass element; and/or wherein the $I_{center}(max)$ and $I_{continuous}(max)$, respectively, is/are the average, maximum and/or minimum, preferably the maximum, of two or more, preferably 2 to 20, more preferably 2, 3, 4, 5 or 6, measurements of the inner diameter, preferably perpendicular to each other or equally distributed, at the respective point along the rotation axis of the elongated glass element; and/or wherein the $I_{center}(min)$, and/or $I_{continuous}(min)$ is/are the average, maximum and/or minimum, preferably the minimum, of two or more, preferably 2 to 20, more preferably 2, 3, 4, 5 or 6, measurements of the inner diameter, preferably perpendicular to each other or equally distributed, at the respective point along the rotation axis of the elongated glass element.

31. Method, system and/or bundle; according to any one of the preceding items,

wherein the inner diameter I, preferably $I_{center}(max)$, $I_{center}(min)$, $I_{center}(mean)$, $I_{continuous}(max)$ and/or $I_{continuous}(min)$ is/are determinable, preferably determined, by the following equation:

$$ix) \quad I = O - (2 * W)$$

wherein the outer diameter O is measurable, preferably measured, by laser scanning or telecentric line camera systems; and
wherein the wall thickness W is measurable, preferably measured, by an interferometer, preferably in the same direction as the outer diameter O; and/or
wherein the inner diameter I, preferably $I_{center}(max)$, $I_{center}(min)$, $I_{center}(mean)$, $I_{continuous}(max)$ and/or $I_{continuous}(min)$ is/are determinable, preferably determined, by an interferometer.

32. Method, system and/or bundle; according to any one of the preceding items,

wherein the number of measurements of the one or more geometric parameter(s) for each cut elongated glass element is 5 to 1*1010, preferably 10 to 105, more preferably 50 to 104, more preferably 100 to 1000.

33. Method, system and/or bundle; according to any one of the preceding items,

wherein the glass is a borosilicate glass, an aluminosilicate glass, a lithium-aluminosilicate (LAS) glass, a soda-lime glass, or a lead glass, preferably a borosilicate glass; and/or
wherein the glass is a Type I glass according to ASTM E 438 and/or European Pharmaocopeia.

34. Method, system and/or bundle; according to any one of the preceding items,

wherein the composition of the glass comprises, in mass-%:

| | |
|---|---|
| Si: | 30 to 98 %, preferably 50 to 90 %, more preferably 70.0 to 74.0 %; and/or |
| $B_2O_3$: | 0 to 30 %, preferably 3 to 20 %, more preferably 7.0 to 16.0 %; and/or |
| $Al_2O_3$: | 0 to 30 %, preferably 1 to 15 %, more preferably 3.0 to 6.5 %; and/or |
| $X_2O$: | 0 to 30 %, preferably 1 to 15 %, more preferably 2.0 to 7.2 %, wherein X is selected from Na, K, Li, preferably X is Na and/or K; and/or |
| YO: | 0 to 30 %, preferably 0.1 to 5 %, more preferably 0.5 to 1.0 %, wherein Y is selected from Ca, Mg, Ba, preferably Y is Ca and/or Mg. |

35. Method, system and/or bundle; according to any one of the preceding items, wherein the composition of the glass consist of, in mass-%:

| | |
|---|---|
| Si: | 30 to 98 %, preferably 50 to 90 %, more preferably 70.0 to 74.0 %; |
| $B_2O_3$: | 0 to 30 %, preferably 3 to 20 %, more preferably 7.0 to 16.0 %; |
| $Al_2O_3$: | 0 to 30 %, preferably 1 to 15 %, more preferably 3.0 to 6.5 %; |
| $X_2O$: | 0 to 30 %, preferably 1 to 15 %, more preferably 2.0 to 7.2 %, wherein X is selected from Na, K, Li, preferably X is Na and/or K; |
| YO: | 0 to 30 %, preferably 0.1 to 5 %, more preferably 0.5 to 1.0 %, wherein Y is selected from Ca, Mg, Ba, preferably Y is Ca and/or Mg; and unavoidable impurities. |

36. Method, system and/or bundle; according to any one of the preceding items, wherein the composition of the glass comprises, in mass-%:

| | |
|---|---|
| Si: | 20 to 98 %, preferably 40 to 75 %, more preferably 50 to 65 %; and/or |
| $B_2O_3$: | 0 to 30 %, preferably 1 to 15 %, more preferably 3 to 9 %; and/or |
| $Al_2O_3$: | 0 to 30 %, preferably 10 to 20 %, more preferably 13 to 18; and/or |
| $X_2O$: | 0 to 30 %, preferably 0 to 5 %, more preferably 0 to 3 %, wherein X is selected from Na, K, Li, preferably X is Na and/or K; and/or |
| YO: | 0 to 50 %, preferably 0.1 to 40 %, more preferably 10 to 35, wherein Y is selected from Ca, Mg, Ba, preferably Y is Ca and/or Mg. |

37. Method, system and/or bundle; according to any one of the preceding items, wherein the composition of the glass consist of, in mass-%:

| | |
|---|---|
| Si: | 20 to 98 %, preferably 40 to 75 %, more preferably 50 to 65 %; |
| $B_2O_3$: | 0 to 30 %, preferably 1 to 15 %, more preferably 3 to 9 %; |
| $Al_2O_3$: | 0 to 30 %, preferably 10 to 20 %, more preferably 13 to 18; |
| $X_2O$: | 0 to 30 %, preferably 0 to 5 %, more preferably 0 to 3 %, wherein X is selected from Na, K, Li, preferably X is Na and/or K; |
| YO: | 0 to 50 %, preferably 0.1 to 40 %, more preferably 10 to 35, wherein Y is selected from Ca, Mg, Ba, preferably Y is Ca and/or Mg; and unavoidable impurities. |

38. Method, system and/or bundle; according to any one of the preceding items,

wherein the elongated glass element is a tube or rod, preferably a tube; and/or
wherein the cut elongated glass elements is a cut glass tube, a cut glass rod or a glass pharmaceutical packaging; and/or
wherein the cut elongated glass elements is a cut glass tube comprising a first end, a cylindrical portion and/or, preferably and, a second end, wherein the first and/or second end are open or closed, preferably wherein the first end and second end are open or closed.

39. Method, system and/or bundle; according to any one of the preceding items,

wherein the cut elongated glass element is a tube or rod and/or, preferably and, comprises a first end, a second end and cylindrical portion, and

wherein the length of the cylindrical portion of the cut elongated glass element is 1 cm or more and 1000 cm or less, preferably 20 cm or more and 400 cm or less, more preferably 60 cm or more and 300 cm or less, more preferably 100 cm or more and 200 cm or less, more preferably 120 cm or more and 180 cm or less.

40. Method, system and/or bundle; according to any one of the preceding items,

wherein the cut elongated glass element is a pharmaceutical packaging and/or, preferably and, comprises a first end, a second end and cylindrical portion, and

wherein the length of the cylindrical portion of the cut elongated glass element is 1 mm or more and 50 cm or less, preferably 0.5 cm or more and 40 cm or less, more preferably 1.0 cm or more and 30 cm or less, more preferably 2 cm or more and 20 cm or less, more preferably 3 cm or more and 15 cm or less, more preferably 4 cm or more and 12 cm or less, more preferably 5 cm or more and 10 cm or less, more preferably 6 cm or more and 8 cm or less.

41 Method, system and/or bundle; according to any one of the preceding items,

wherein the elongated glass element comprises a cylindrical portion, which exhibits an outer diameter of 0.5 mm to 500 mm, preferably 2 mm to 63 mm, more preferably 5 mm to 60 mm, more preferably 6 mm to 50 mm; and/or

wherein the elongated glass element comprises a cylindrical portion, wherein the cylindrical portion is a tube and exhibits a wall thickness of 0.001 mm to 250 mm, preferably 0.1 mm to 32.5 mm, more preferably 0.2 mm to 30 mm, more preferably 0.25 mm to 25 mm.

42. Pharmaceutical packaging producible, preferably produced, from one or more cut elongated glass elements of the bundle according to any one of the preceding items.

43. Use of one or more cut elongated glass elements of the bundle according to any one of the preceding items to produce a pharmaceutical packaging or a technical glass, preferably a pharmaceutical packaging.

44. Method, system, bundle, pharmaceutical packaging and/or use; according to any one of the preceding items, wherein the pharmaceutical packaging is a vial, ampule, syringe and/or cartridge, more preferably a syringe or cartridge.

In connection with the above-described preferred embodiments and items, by the aid of the figures, generally preferred embodiments and further developments of the teaching will be explained:

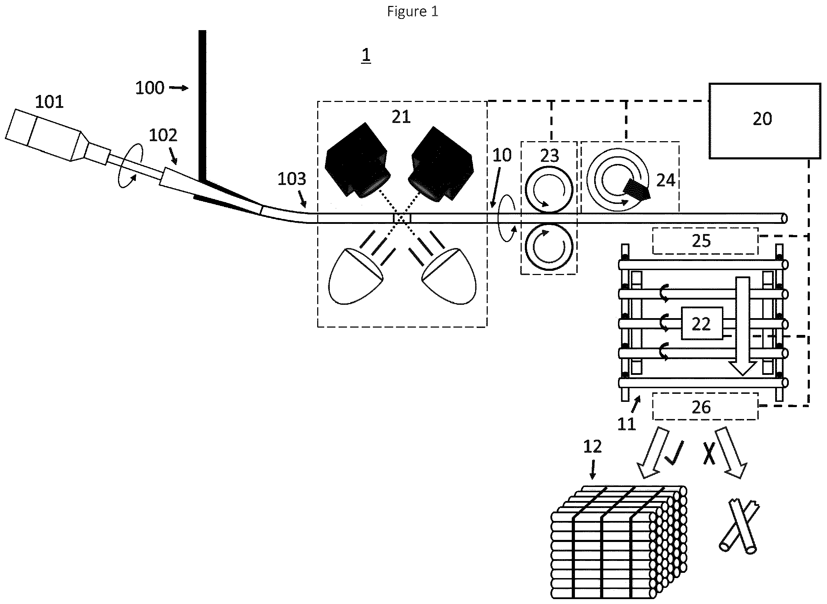

Fig. 1: Schematic depiction of a system according to an embodiment.

In the following description of embodiments, the same reference numeral designate similar components.

Reference list

| | |
|---|---|
| 1 | system |
| 20 | computer unit |
| 21 | first measuring apparatus |
| 22 | second measuring apparatus |
| 23 | drawing device |
| 24 | cutting device |
| 25 | sorting device |
| 26 | further sorting device |
| 10 | continuous elongated glass element, e.g. a continuous glass tube |
| 11 | cut elongated glass element, e.g. a cut elongated glass tube |
| 12 | bundle comprising cut elongated glass elements |
| 100 | molten glass |
| 101 | motor |
| 102 | Danner mandrel |
| 103 | point where the molten glass solidifies |

Figure 1 shows schematic depiction of a system (1) according to an embodiment of the invention. In the beginning, molten glass (100) flows on a Danner mandrel (102), which is mounted on a motor (101). Meanwhile, the motor (101) continuously turns the Danner mandrel (102). The motor (101) and the Danner mandrel (102) are tilted such that the molten glass (100) reaches the lower end of the Danner mandrel (102), where a tube of molten glass is formed.

The tube of molten glass (100) cools down and at a specific position (103), the tube of molten glass solidifies and a glass tube (10), i.e. a continuous elongated glass element (10), is formed. The solid glass tube (10) is drawn by the drawing device (23). At a position between the point where the molten glass solidifies (103) and the drawing device (23), one or more geometric parameter(s), for example the inner diameter, is/are continuously measured by a first measuring apparatus (21) while the glass tube (10) is continuously drawn by the drawing device (23). After the tube has passed the drawing device (23), it is separated, e.g. cut to length, by a cutting device (24) to obtain cut glass tubes (11), i.e. cut elongated glass elements (11). The system 1 comprises a sorting device (25), which sorts out the cut glass tubes (11), in which one or more geometric parameter(s) is/are not within a predetermined range. Subsequently, one or more geometric parameter(s) of the cut glass tube (10) is/are measured by a second measuring apparatus (22). A computer unit (20) is connected to the first measuring apparatus (21), the second measuring apparatus (22), the drawing device (23) and the cutting device (24) and continuously collects and the data therefrom. Further the computer unit continuously calibrates the first measuring apparatus and the second apparatus and may also control whether the cut elongated glass element(s) (11) having one or more geometric parameter(s) being not inside a predetermined range has/have been sorted out by the sorting device (25). Finally, a further sorting device (26) sorts out the cut elongated glass element(s) (11) having one or more geometric parameter(s) being not inside a predetermined range and then the cut elongated glass element(s) (11) having a high quality are packed in a bundle (12).

**Claims**

1.  Method for obtaining cut elongated glass elements (11), comprising the steps, preferably in this order:

    - providing a continuous elongated glass element (10);
    - continuously measuring one or more geometric parameter(s) of the continuous elongated glass element to obtain one or more continuous geometric parameter(s);
    - cutting the continuous elongated glass element (10) to obtain cut elongated glass elements (11);
    - measuring one or more geometric parameter(s) at one or more point(s) along the rotation axis of the cut elongated glass element(s) (11) to obtain one or more individual geometric parameter(s); and
    - connecting the one or more of the continuous geometric parameter(s) with the one or more of the individual geometric parameter(s).

2.  Method according to any one of the preceding claims, comprising the further step(s):

    - using the one or more continuous geometric parameter(s) and/or the one or more individual geometric parameter(s) to identify the cut elongated glass element (11), preferably at a later production step or the final product; and/or
    - bundling the cut elongated glass elements (11) to form a bundle comprising cut elongated glass elements (12); and/or
    - producing one or more, preferably 5 or more, pharmaceutical packaging(s) out of the cut elongated glass element(s) (11); preferably and bundling the pharmaceutical packaging(s) to form a bundle of pharmaceutical packaging(s).

3.  System (1) for obtaining cut elongated glass elements (11), preferably and for performing the method according to claims 1 or 2, comprising:

    - a providing apparatus configured for providing a continuous elongated glass element (10);
    - a first measuring apparatus (21) configured for continuously measuring one or more geometric parameter(s) of the continuous elongated glass element (10) to obtain one or more continuous geometric parameter(s);
    - a cutting device (24) configured for cutting the continuous elongated glass element (10) to obtain cut elongated glass elements (11);
    - a second measuring apparatus (22) configured for measuring one or more geometric parameter(s) at one or more point(s) along the rotation axis of the cut elongated glass element(s) (11) to obtain one or more individual geometric parameter(s); and
    - a computer unit (20) configured for connecting the one or more of the continuous geometric parameter(s) with the one or more of the individual geometric parameter(s).

4.  Method and/or system according to any one of the preceding claims,

wherein the continuous elongated glass element (10) is provided by a Danner or the Vello process, preferably by a Danner process,

preferably and wherein the continuous elongated glass element (10) is continuously, preferably and contactless, drawn, preferably through the first measuring apparatus (21) by a drawing device (23), while the one or more continuous geometric parameter(s) are measured.

5. Method and/or system according to any one of the preceding claims,

wherein the cut elongated glass element (11) comprises a first end, a second end and a cylindrical portion, and/or wherein the one or more point(s) along the rotation axis of the cut elongated glass element(s) is/are the first end, the second end and/or the center, preferably the center, of the cylindrical portion of the respective cut elongated glass element (11).

6. Method and/or system according to any one of the preceding claims,

wherein the one or more individual geometric parameter(s) comprise(s), preferably is/are, the individual inner diameter, the individual outer diameter, the individual ovality and/or the individual wall thickness; more preferably comprises, more preferably is, the individual inner diameter; and/or

wherein the one or more continuous geometric parameter(s) is/are the continuous inner diameter, the continuous outer diameter, the continuous ovality and/or the continuous wall thickness; more preferably comprises, more preferably is, the continuous inner diameter $I_{continuous}$; and/or

wherein the one or more individual geometric parameter(s) is/are the center inner diameter, the center outer diameter, the center ovality and/or the center wall thickness, preferably the center inner diameter $I_{center}$; and/or

wherein the one or more geometric parameter(s) obtained by the continuous measurement and the one or more geometric parameter(s) obtained by the measurement at one or more point(s) are the same, preferably are the continuous inner diameter $I_{continuotis}$ and the individual inner diameter, more preferably the center inner diameter $I_{center}$.

7. Method and/or system according to any one of the preceding claims, wherein connecting the one or more of the continuous geometric parameter(s) with the one or more of the individual geometric parameter(s) is one or more of:

- calibrating, preferably continuously calibrating, the continuous measurement based on the measurement at one or more point(s) along the rotation axis; and/or
- adapting, preferably continuously adapting, the one or more continuous geometric parameter(s) based on the one or more individual geometric parameter(s); and/or
- calibrating preferably continuously calibrating, the measurement at one or more point(s) along the rotation axis based on the continuous measurement; and/or
- adapting, preferably continuously adapting, the one or more individual geometric parameter(s) based on the one or more continuous geometric parameter(s); and/or
- comparing and/or assigning the one or more continuous geometric parameter(s) with/to the one or more individual geometric parameter(s); and/or
- comparing and/or assigning the one or more individual geometric parameter(s) with/to the one or more continuous geometric parameter(s); and/or
- connecting the one or more parameter(s) to obtain information about the quality of a cut elongated glass element (11) with respect to the one or more geometric parameter(s).

8. Bundle comprising 5 or more cut elongated glass elements (12),

wherein each cut elongated glass element (11) comprises:

a) a first end,
b) a cylindrical portion, and
c) a second end;

wherein one or more of the following equation(s) is/are fulfilled:

i)     $(I_{center}(max) - I_{center}(min)) / I_{center}(mean) \leq 4.0 \times 10^{-2}$ [μm/μm];

and/or

ii)     $(I_{continuous}(max) - I_{continuous}(min)) / I_{center}(mean) \leq 4.0 \times 10^{-2}$ [μm/μm];

wherein $I_{center}(max)$ is the maximum center inner diameter of the cylindrical portions of all cut elongated glass elements (11) in the bundle (12);
wherein $I_{center}(min)$ is the minimum center inner diameter of the cylindrical portion of all cut elongated glass elements (11) in the bundle (12);
wherein $I_{center}(mean)$ is the mean of the inner diameters at the center of the cylindrical portions of all cut elongated glass elements (11) in the bundle (12);
wherein $I_{continuous}(max)$ is the maximum continuous inner diameter of the cylindrical portion of any single cut elongated glass element (11) in the bundle (12); and
wherein $I_{continuous}(min)$ is the minimum continuous inner diameter of the cylindrical portion of said single cut elongated glass element (11) in the bundle (12).

9.  Bundle (12) according to claim 8, wherein the following equation is fulfilled:

iv)     $(I_{center}(max) - I_{center}(min)) / I_{center}(mean) \leq b$;

wherein b [μm/μm] is $4.0 \times 10^{-2}$, preferably $3.0 \times 10^{-2}$, more preferably $2.0 \times 10^{-2}$, more preferably $1.0 \times 10^{2}$, more preferably $8.0 \times 10^{-3}$, more preferably $6.0 \times 10^{-3}$, more preferably $4.0 \times 10^{-3}$, more preferably $2.0 \times 10^{3}$, more preferably $1.0 \times 10^{-3}$, more preferably $8.0 \times 10^{-4}$, more preferably $6.0 \times 10^{-4}$, more preferably $4.0 \times 10^{-4}$, more preferably $2.0 \times 10^{-4}$, more preferably $1.0 \times 10^{-4}$.

10. Bundle (12) according to claim 8 or 9,

wherein the following equation is fulfilled:

vi)     $(I_{continuous}(max) - I_{continuous}(min)) / I_{center}(mean) \leq d$;

wherein d [μm/μm] is $4.0 \times 10^{-2}$, preferably $3.0 \times 10^{-2}$, more preferably $2.0 \times 10^{-2}$, more preferably $1.0 \times 10^{-2}$, more preferably $8.0 \times 10^{-3}$, more preferably $6.0 \times 10^{-3}$, more preferably $4.0 \times 10^{-3}$, more preferably $2.0 \times 10^{3}$, more preferably $1.0 \times 10^{-3}$, more preferably $8.0 \times 10^{-4}$, more preferably $6.0 \times 10^{-4}$, more preferably $4.0 \times 10^{-4}$, more preferably $2.0 \times 10^{-4}$, more preferably

11. Bundle (12) according to any one of claims 8 to 10,
wherein $I_{center}(max) - I_{center}(min))$ is 200 μm or less, preferably 150 μm or less, more preferably 120 μm or less, more preferably 110 μm or less, more preferably 100 μm or less, more preferably 90 μm or less, more preferably 80 μm or less, more preferably 70 μm or less, more preferably 65 μm or less, more preferably 60 μm or less, more preferably 55 μm or less, more preferably 50 μm or less, more preferably 45 μm or less, more preferably 40 μm or less, more preferably 35 μm or less, more preferably 30 μm or less, more preferably 25 μm or less, more preferably 20 μm or less, more preferably 15 μm or less, more preferably 10 μm or less, more preferably 5 μm or less.

12. Bundle (12) according to any one of claims 8 to 11,
wherein one or more of the following equation(s) is/are fulfilled:

vii)     $(I_{center}(max) - I_{center}(mean)) \leq e$;

wherein e is 100 μm, preferably 80 μm, more preferably 70 μm, more preferably 60 μm, more preferably 50 μm, more preferably 40 μm, more preferably 30 μm, more preferably 20 μm, more preferably 15 μm, more preferably 10 μm, more preferably 5 μm, more preferably 2 μm; and/or, preferably and,

$$viii) \quad \left(I_{center}(mean) - I_{center}(min)\right) \leq f;$$

wherein f is 100 $\mu$m, preferably 80 $\mu$m, more preferably 70 $\mu$m, more preferably 60 $\mu$m, more preferably 50 $\mu$m, more preferably 40 $\mu$m, more preferably 30 $\mu$m, more preferably 20 $\mu$m, more preferably 15 $\mu$m, more preferably 10 $\mu$m, more preferably 5 $\mu$m, more preferably 2 $\mu$m.

13. Method, system (1) and/or bundle (12); according to any one of the preceding claims,

wherein the glass is a borosilicate glass, an aluminosilicate glass, a lithium-aluminosilicate (LAS) glass, a soda-lime glass, or a lead glass, preferably a borosilicate glass; and/or
wherein the glass is a Type I glass according to ASTM E 438 and/or European Pharmaocopeia.

14. Pharmaceutical packaging producible, preferably produced, from one or more cut elongated glass elements (11) of the bundle (12) according to any one of claims 8 to 12.

15. Use of one or more cut elongated glass elements (11) of the bundle (12) according to any one of the claims 8 to 12 to produce a pharmaceutical packaging or a technical glass, preferably a pharmaceutical packaging.

Figure 1

Europäisches
Patentamt

European
Patent Office

Office européen
des brevets

# EUROPEAN SEARCH REPORT

Application Number

EP 21 19 7615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP S53 78219 A (NIPPON ELECTRIC CO) 11 July 1978 (1978-07-11) * figure 1 * ----- | 1-15 | INV. C03B33/037 C03B33/06 G05B19/00 |
| A | CN 112 777 921 A (HUNAN QIBING PHARMACEUTICAL MATERIAL TECH CO LTD) 11 May 2021 (2021-05-11) * the whole document * ----- | 1-15 | |
| A | US 2018/162765 A1 (WITZMANN ANDRÉ [DE] ET AL) 14 June 2018 (2018-06-14) * paragraph [0080]; figure 4 * ----- | 8-15 | |

| | TECHNICAL FIELDS SEARCHED (IPC) |
|---|---|
| | C03B G05B |

The present search report has been drawn up for all claims

| Place of search | Date of completion of the search | Examiner |
|---|---|---|
| The Hague | 15 June 2022 | Marrec, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 21 19 7615

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

**Application Number**

EP 21 19 7615

The Search Division considers that the present European patent application does not comply with the requirements of unity of invention and relates to several inventions or groups of inventions, namely:

```
1. claims: 1-7(completely); 13(partially)

        Invention I, Claims 1-7, 13 (Partial), Method of cutting
        elongated glass elements and associated system.
                           ---

2. claims: 8-12, 14, 15(completely); 13(partially)

        Invention II, Claims 8-12, 13 (Partial), 14 and 15, Bundle
        of glass elongated elements.
                           ---
```

## ANNEX TO THE EUROPEAN SEARCH REPORT
## ON EUROPEAN PATENT APPLICATION NO.

EP 21 19 7615

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | | Publication date | Patent family member(s) | | Publication date |
|---|---|---|---|---|---|
| JP S5378219 | A | 11-07-1978 | JP S5378219 A | | 11-07-1978 |
| | | | JP S5915087 B2 | | 07-04-1984 |
| CN 112777921 | A | 11-05-2021 | NONE | | |
| US 2018162765 | A1 | 14-06-2018 | CN 108275870 A | | 13-07-2018 |
| | | | DE 102016123865 A1 | | 14-06-2018 |
| | | | EP 3333135 A1 | | 13-06-2018 |
| | | | JP 2018095547 A | | 21-06-2018 |
| | | | US 2018162765 A1 | | 14-06-2018 |

EPO FORM P0459

For more details about this annex : see Official Journal of the European Patent Office, No. 12/82

## REFERENCES CITED IN THE DESCRIPTION

**Patent documents cited in the description**

- EP 20195758
- EP 3848701 A1
- EP 20150706

- DE 102005038764 B3
- DE 102006034878 B3

**Non-patent literature cited in the description**

- Schott Guide to Glass. Springer